Europäisches Patentamt

European Patent Office

Office européen des brevets

(11) Publication number: **0 278 393**
**A2**

## (12) EUROPEAN PATENT APPLICATION

(21) Application number: **88101599.4**

(22) Date of filing: **04.02.88**

(51) Int. Cl.4: **G10K 11/16 , B60R 13/08**

(30) Priority: **10.02.87 IT 6708287**

(43) Date of publication of application:
**17.08.88 Bulletin 88/33**

(84) Designated Contracting States:
**CH DE ES FR GB LI NL SE**

(71) Applicant: **C.S.P. CENTRO STUDI E PROTOTIPI S.R.L.**
**Via Molino della Spiua n. 28**
**I-10028 Trofarello - TO(IT)**

(72) Inventor: **Albera, Sergio**
**C. so Racconigi 190**
**I-10100 Torino(IT)**
Inventor: **Piumetti, Guglielmo**
**Via Braida 62**
**I-10041 Carignano - TO(IT)**

(74) Representative: **Lotti, Giorgio**
**c/o Ing. Barzanò & Zanardo Milano S.p.A. Via Cernaia 20**
**I-10122 Torino(IT)**

(54) **Soundproofing panels for applications in the automotive sector and their manufacturing procedure.**

(57) Soundproofing panels for applications in the automotive sector made of an agglomerate (rubber batch), thermally molded, containing elastomer, plasticizer, high density mineral filler and chlorocaoutchouc, such agglomerate is being paired to at least one selfsupporting premoldable layer of body covering, maintaining a constant thickness within ±10%.

FIG. 1

# SOUNDPROOFING PANELS FOR APPLICATIONS IN THE AUTOMOTIVE SECTOR AND THEIR MANUFAC-TURING PROCEDURE

The invention refers to soundproofing panels having a high acoustic efficiency, to be applied in the automotive sector, and to their manufacturing procedure.

These soundproofing panels consist of a batch of elastomer, chlorocaoutchouc, plasticizer and high density mineral filler, combined with one or more layers of adequately porous material made of textile fibers or synthetic foams, or combined with a textile lining like a moquette or a loose woven fabric plus, possibly, one or more layers of the above mentioned porous material. Such composite panel is being premolded between two molds which determine shaping and outline.

These panels are being positioned and paired on the plate, following the known method and utilized as separation between the engine compartment and the interior compartment, or as a lining of the floor of the interior compartment, or of the lower part and sides of the baggage compartment.

The following points are some of the purposes of the invention and some advantages offered by these compounds with respect to the materials that can be found on the market at the moment:
- a decrease of the weight of the soundproofing material with respect to the types that can be found on the market now -with equal acoustic performance - which can be evaluated between 12 and 18%; this is possible because of the particular type of batch and for the specifications of the materials employed;
- a decrease in the cost of components that can be evaluated between 5 and 10% (due to the greater incidence of the material on the cost when the weight of the components increases and to the possibility of improving the weight decrease acting on the thickness of the premolded material).
- improvement in the softness/elasticity specification of the premolded material. At the moment each variation in order to improve - from the acoustic point of view - the thickness/density of the premolded material is being partially diminished by the relating stiffness of heavy materials, superimposed to it, employed up to now (generally called septum) particularly in the case of materials having a high surface weight (> 6 Kg/sqm). The specifications of the proposed material allow to limit the said decrease. It may thus be hypothesized that the weight reduction with equal acoustic efficiency or the improvement of the acoustic efficiency with equal weight could even be higher than the result of the tests if premolded materials having a higher thickness would be adopted on future car bodies. Positive indications to this regard are the outcome of the laboratory and road tests and allow to hypothesize that it may be possible to reduce the weight up to 18% (according to laboratory tests outcome);
- improved processing of the material with pairing technologies maintaining a constant thickness by means of mold and dolly; the mass of the soundproofing surface is thus evenly distributed thanks to the pairing technology and to the material specifications; the thickness variations obtained are within 10% instead of 30%-40%, and a subsequent deadening uniformity takes place on the entire surface of the premolded material.

For the above mentioned purposes and others that will be better appreciated as the description follows, the invention proposes to realize soundproofing panels for applications in the automotive sector characterized in that they are made of a thermally molded agglomerate (rubber batch) of elastomer, plasticizer, high density mineral filler and chlorocaoutchouc; such agglomerate is combined with at least one self-supporting premoldable layer of lining of the car body.

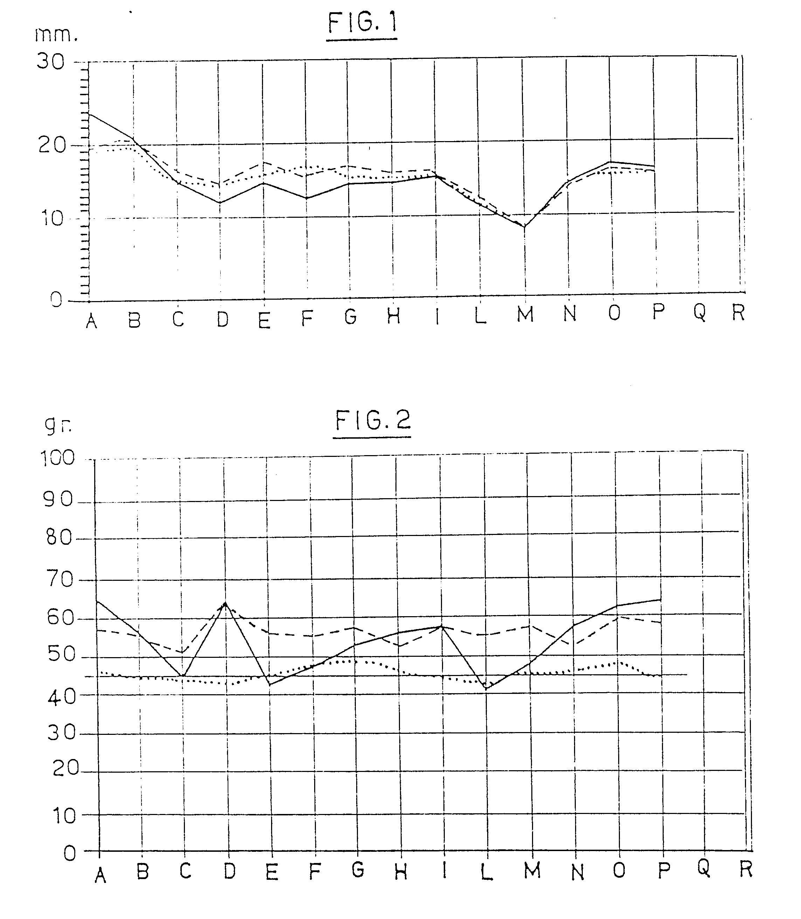

The enclosed Fig. 1 and 2 are diagrams illustrating respectively the distribution of the thickness and of the weight of the soundproofing panel on the front part of a car.

According to the invention, the batch combined with the porous material or with an aesthetic textile is made of a type of elastomer or synthetic rubber as, for example, one of the following:
- Styrene butadiene '(SBR)
- Isobutylene isoprene (IIR)
- Polyisoprene
- Ethylene Propylene (EPR)
- Neoprene
combined with a plasticizer having a base of naphtenes oil or other commonly used types (e.g. cereclor).

The batch also foresees a high density mineral filler of the calcium carbonate or barium sulphate types, and a natural chlorinated rubber like chlorocaoutchouc. Finally, lampblack or other coloring material may be added to give a coloring to the product obtained.

According to the invention, two batch suggestions with the respective weight percentages, may be the following:

1st SUGGESTION Polyisoprene     15-45%
Plasticizer     1-3%
Chlorocaoutchouc     2-5%
Calcium carbonate     50-80%
Lampblack     small percentage


2nd SUGGESTION Polyisoprene     25-55%
Plasticizer     1-3%
Chlorocaoutchouc     2-5%
Barium sulphate     40-70%
Lampblack     small percentage

Another type of batch is the one commonly called Tecsound, produced by TEXSA S.A. of Barcelona which was patented in Spain with N. 554.644.

The mechanical specification of the batch and the procedure which is the subject of the invention allow the pairing of the premolded material utilizing a technology characterized by the low heat requirement. This characteristic, combined with the high softening limit reduces the stretching of the material to the minimum and allows a high deep-drawing with constant thickness.

This is a further important step in the design of soundproofing panels of new car bodies and it is also particularly important for the application on existing bodies that need prominent drawings.

A further improvement may be obtained by employing premolded materials with a greater thickness (due to the decrease of the thrust on the surface of the material and of the subsequent minor mechanical stresses in the critical points). The enclosed diagrams respectively summarize the results of a research on the distribution of the thickness and the weight of the soundproofing layer of the dashboard of the UNO D/FIRE motorcar. It is evidenced by the graphs the most homogenuous distribution on the premolded material subject of the invention with respect both to the bituminous septum paired by mold and dolly and to the vacuum paired bituminous septum.

Points from A to R of the diagrams illustrate the sectionized areas distributed on the surface of the front soundproofing panel (each point of the sectionized area is a square measuring 100x100 mm; the values indicated in the graph represent the mean measured on various points of the above mentioned square).

The curves represent:
_____ normally supplied front panel made of vacuum septum -total weight 7230 gr.
------normally supplied front panel made of constant thickness septum - total weight 7180 gr.
..... front panel made of premolded material subject of the invention and having a constant thickness - total weight 6000 gr.

Besides the advantages already mentioned, with respect to other materials, the following are also obtained:
- greater stability to temperature (no leakings take place up to 110°C);
- uniformity of performance at various operating temperatures and at temperature < 5°C;
- improvement with aging;
- elimination of breaks and/or cracks during operation (also at temperature < 5°C) both due to batch specification and thickness uniformity. Such risk does not exist also in case of a greater thickness and/or greater softness of the premolded material. This is very important especially for the running boards on the floor of the motorcare.
- better possibility of combination with other materials in complex multi-layer soundproofing compositions where each layer "performs a defined particular function" with subsequent exploitation of the obtainable "synergisms";
- possibility of obtaining gaskets already included in the component.

The following may be the full composition of the panel obtained:


porous layer/s: - natural and/or synthetic textile fibers impregnated with thermosetting resins/plastics
- synthetic polyurethan and/or polyethylene foams having closed or open cells


heavy layer/s: - elastomer batch as mentioned under Suggestions 1 and 2 .


carpet: - Polyester/polypropylene fibers treated or not with binding resins (acrylic type) with/without support of thermally moldable resin (like polyethyelene or other).

The above mentioned batch is being preheated up to the elastomer softening temperature and combined by mold to the premolded porous deadening layer of which it takes the shape and geometry, and then undergoes outer trimming and hollow punching operations.

Some procedures for the obtainment of soundproofing panels according to the invention are now being examined.

## EXAMPLE N.1

a) preheating of the batch at proper station;

b) preheating at proper station of the light porous material made of textile fibers impregnated with thermosetting resins

c) pairing by means of male and female mold at differentiated temperature and premolding with completion of the "baking" (polymerization of the thermosetting resins) of the porous layer, possibly including the outer hollow punching and the central piercing, at proper station;

d) possible hollow punching of perimeter and of other holes. The procedure is obtained by means of automatisms and material translation systems in the electronically driven plate under the press.

Molds made of resin, aluminium, iron are employed; possible passages for heat conductor and/or coolant fluids are properly preset.
Operating conditions:
Pressure: up to 500 ton/sqm.
Molding temperature:
- cold mold max. 60°C
- hot mold max. 220°C
Preheating:
high frequency:
- 6 Mhz 16 Mhz
- power from 14 to 25 KW
By warm air:
- temperature up to 300 - 400°C
The originality of the above mentioned procedure regards the following:
- molding by means of differentiated temperatures molds and setting up of thermostatic settings;
- preheating of the porous layer with adequate systems: warm air/high frequency/waves/IR radiations or combination of same
- obtainment of the finished panel in one only stage of machining.

## EXAMPLE N.2

a) preheating of a textile lining made of moquette or of unwoven fabric adequately treated for the premolding;

b) preheating of the elastomer batch;

c) pairing by means of cold molds and possibly hollow punching of perimeter and of central holes;

## EXAMPLE N.3

a) Preheating of a textile lining made of moquette or of unwoven fabric already paired with a layer of elastomer batch (soundproofing carpet);

b) preheating of a porous deadening layer made of textile fibers impregnated with thermosetting resins;

c) pairing by male and female mold at differentiated temperatures and premolding with completion of the "baking" (polymerization of the thermosetting resins) of the porous layer, possibly including the outer hollow punching and the central piercing, at proper station;

d) possible punching of perimeter and of other holes.

## EXAMPLE N.4

a) Preheating of the batch on a male mold positioned on the press;

b) transfer of the premolded material on the preheated batch;

c) cold pairing to premolded material with or without the help of adhesive by means of the closure of the male mold on the female mold positioned on the plate of the upper press;

d) hollow punching in the following station.

## EXAMPLE N.5

a) transfer of the batch on the porous premolded material positioned in proper shaped containers;

b) preheating by warm air and adjustment of the batch to the shape of the premolded material thanks to the heat action, to the light pressure exerted by the male dolly and to the suction through the porous premolded material;

c) definitive adjustment of the batch on the porous premolded material by means of hot air pressure spouts at suitable temperature (up to 400°C), with or without suction through the porous layer, with or without the intervention of the dolly;

d) cooling by water atomization or cold air or by other cooling vectors;

e) hollow punching.

## Claims

1. Soundproofing panels for applications in the automotive sector characterized in that they are made of a thermally moldable agglomerate (rubber batch) of elastomer, plasticizer, high density mineral filler and chlorocaoutchouc such agglomerate is paired, its thickness being kept constant with ±10%, to at least one selfsupporting premoldable layer of body covering.

2. Soundproofing panels according to claim 1 characterized in that the selfsupporting layer is made of one or more layers of premolded and shaped porous material laid on the plate of the car body.

3. Panels according to claim 1 characterized in that the selfsupporting layer is made of a premolded and shaped carpet for the covering of visible parts on motorcars (floor of the car and baggage compartment).

4. Panels according to claim 1, characterized in that the agglomerate is placed among the layers of porous material laid on the plate and the covering carpet.

5. Panel according to claim 1 characterized in that the elastomer is polyisoprene.

6. Panel according to claim 1 characterized in that the elastomer is styrene butadiene.

7. Panel according to claim 1 characterized in that the elastomer is isobutylene isoprene.

8. Panel according to claim 1 characterized in that the elastomer is ethylene propylene.

9. Panel according to claim 1 characterized in that the mineral filler consists of calcium carbonate.

10. Panel according to claim 1 characterized in that the mineral filler consists of barium sulphate.

11. Panel according to claim 1 characterized in that the rubber batch has the following weight composition:

Polyisoprene     15-45
Plasticizer      1-3%
Chlorocaoutchouc     2-5%
Calcium carbonate     50-80%
Lampblack     small percentage

12. Panel according to claim 1 chracterized in that the rubber batch has the following weight composition:

Polyisoprene     25-55%
Plasticizer      1-3%
Chlorocaoutchouc     2-5%
Barium sulphate     40-70%
Lampblack     small percentage

13. Pairing procedure of a layer of agglomerate (batch) to a layer of porous material according to the above claims, characterized in that the following stages are foreseen:

a) Preheating of the batch at a proper station.

b) Preheating at a proper station of the light porous material consisting of textile fibers impegnated with thermosetting resins.

c) Pairing by male and female mold at differentiated temperature and premolding with completion of the "baking" (polymerization of the thermosetting resins) of the porous layer, possibly including the outer hollow punching and the central piercing, at proper station.

d) Possible hollow punching of perimeter and of other holes.

14. Pairing procedure of a layer of agglomerate (batch) to a covering carpet according to claims 3 and from 5 to 12 characterized in that the following stages are foreseen:

a) Preheating of a textile covering consisting of moquette or of unwoven fabric adequately treated for the premolding.

b) Preheating of the elastomer batch.

c) Pairing by cold molds and possibly hollow punching of perimeter and of central holes.

15. Pairing procedure of a layer of agglomerate (batch) to a layer of porous material according to claims from 4 to 12 characterized in that the following stages are foreseen:

a) Preheating of a textile covering consisting of moquette or of unwoven fabric already paired to a layer of elastomer batch (soundproofing carpet).

b) Preheating of a porous deadening layer consisting of textile fibers impregnated with thermosetting resins.

c) Pairing by male and female molds at differentiated temperatures and premolding with completion of the "baking" (polymerization of the thermosetting resins) of the porous layer possibly including the outer hollow punching and the central piercing at a proper station.

d) Possible punching of perimeter and of other holes.

16. Pairing procedure of a layer of agglomerate (batch) to a layer of porous material, according to claims 1 and 2 and from 5 to 12 where the porous material is already premolded characterized in that the following operating stages are foreseen:

a) preheating of the batch on a male mold positioned on the press

b) transfer of the premolded material on the preheated batch

c) cold pairing to premolded material with or without the help of adhesive by means of closure of the male mold on the female mold positioned on the plate of the upper press.

17. Pairing procedure of a layer of agglomerate (batch) to a layer of porous material according to claims 1 and 2 and from 5 to 12 where the porous material is already premolded, characterized in that the following operating stages are foreseen:

a) transfer of the batch on the porous premolded material positioned in suitable shaped containers

b) preheating by warm air and adjustment of the batch to the shape of the premolded material thanks to the heat action, to the light pressure exerted by a male dolly, and to the suction through the porous premolded material

c) definitive adjustments of the batch on the porous premolded material by means of hot air pressure spouts at suitable temperature (400°C), with or without suction through the porous layer, with or without the intervention of the dolly

d) cooling by water atomization or cold air or by other cooling vectors.

e) hollow punching.

## FIG. 1

mm.

## FIG. 2

gr.